# EUROPEAN PATENT APPLICATION

(11) **EP 4 668 519 A1**
(43) Date of publication of application: **24.12.2025**
(21) Application number: 24183276.5
(22) Date of filing: 20.06.2024
(51) Int. Cl.: H02J 1/10, C25B 1/04, H02J 3/00, H02J 7/34

(54) **ELECTROLYSIS PLANT AND METHOD FOR OPERATING AN ELECTROLYSIS PLANT**

(71) Applicant: Siemens Energy Global GmbH & Co. KG, 81739 München (DE)
(72) Inventor: Schumann, Sven, 91452 Wilhermsdorf (DE); Bendig, Marvin, 90513 Zirndorf (DE); Langenberg, Nils, 90461 Nürnberg (DE); Loku, Fisnik, 90439 Nürnberg (DE); Craciun, Bogdan, 91052 Erlangen (DE)

(57) **Abstract**

The invention is related to a large-scale electrolysis plant (1) comprising an electrolyser (3) and a rectifier (5), the rectifier (5) comprising a DC-voltage output (7) that is connected to the electrolyser (3) via a DC supply line (13) and an AC-voltage input (9) that is designed for a connection to the public grid (11) and for receiving power from the public grid (11) to supply the electrolyser (3) with electrolysis current, wherein a bidirectional DC storage facility (15) that comprises a rechargeable electrical storage unit (17) is branching off the DC supply line (13). Advantageously in the electrolysis plant (1) a Fault Ride Through functionality is integrated.

The invention is further related to a method for operating an electrolysis plant (1), wherein the electrolysis plant (1) is connected to the public grid (11).

## Description

The invention is related to an electrolysis plant comprising an electrolyser and a rectifier. The invention also relates to a method for operating an electrolysis plant connected to a grid, in particular a public grid or an island network.

An electrolysis plant is an electrochemical device that uses electricity, mainly DC current, to convert substances or chemicals provided as an educt via electrolysis processes into products. Corresponding to the variety of different electrochemical electrolysis processes, there is also a large variety of electrolysis systems, such as an electrolysis plant water electrolysis and production of Hydrogen.

Hydrogen is nowadays generated from water, for example, by means of a proton exchange membrane (PEM) electrolysis or an alkaline electrolysis. The electrolysis systems use electrical energy to produce hydrogen and oxygen from the water supplied. This process takes place in an electrolysis stack composed of several electrolysis cells. Several electrolysis cells are connected in series to form an electrolysis module, or module for short. Several modules in turn are connected in series to form an electrolysis stack. Water is introduced as a reactant into the electrolysis stack, which is under direct current (DC voltage), and after the water has flowed through the electrolysis cells, two fluid streams emerge as electrolysis products, consisting of water (H₂O) and gas bubbles (O₂ and H₂) in a two-phase mixture.

Current considerations are to generate valuable materials with excess energy from renewable energy sources in times of plenty of sun and wind, i.e. with above-average solar power or wind power generation. A resource can be hydrogen notably, which is generated by water electrolysis systems. For example, so-called renewable energy gas - also known as "RE gas" - can be produced bases of hydrogen. A renewable gas is a combustible gas that is obtained from renewable sources using electrical energy.

Hydrogen is a particularly environmentally friendly and sustainable energy source. It has the unique potential of realizing energy systems, transportation systems and large parts of chemical industry without CO₂ emissions. For this to succeed, however, the hydrogen must not come from fossil sources, but must be produced with the help of renewable energies. At least a growing proportion of the electricity generated from renewable sources is now being fed into the public grid. Thus, according to the electricity mix, at least a corresponding and increasing proportion of green hydrogen can be generated if an electrolysis system is operated with electricity from the public grid or an island grid containing renewable power generation units.

In the case of electrolysis carried out on an industrial scale, the direct current is mainly provided via line-commutated rectifiers, but also self-commutated rectifiers can be used.

EP 3 556 905 A1 discloses such a circuit arrangement for the direct current supply of a plurality of electrolysers arranged in parallel. The circuit arrangement includes a rectifier, which converts an AC voltage on the input side into a first DC voltage on the output side. Each electrolyser is connected in parallel to the output of the rectifier via a converter, in particular a step-down converter, that converts the first direct voltage into a second direct voltage, such that the second direct voltage drops across the electrolyser. Each of the rectifiers, in particular the step-down converter, can be controlled or regulated thereby to adapt the level of its second direct voltage, its output voltage. By using the step-down converters designed to be controllable and/or adjustable for each of the electrolysers, the current flow through each electrolyser can also be adjusted as required when the electrolysers are connected in parallel.

In recent years, the energy generation market has changed significantly. The path inevitably leads away from large power plants to decentralized generators from renewable energy sources - spread across the whole country. In order to be able to operate a stable power grid despite this change, guidelines and standards are constantly adapted to the current situation.

Particular attention is paid to the so-called dynamic grid support. This property describes the behavior of the generating unit in the event of a grid failure. If it occurs in the public power grid (e.g. through a short-circuit in an overhead line) and causes a short-term voltage-drop or (e.g. due to a lightning strike in a substation) a short-term voltage increase, it must be ensured that that the public power grid remains stable and that there is no large-scale failure. For this to be obtained, basically, three things must be ensured: On the one hand, the generating unit in the event of an error may not switch off and not disconnect, as this behavior would put additional strain on the network and could possibly lead to a chain reaction. On the other hand, the system must support the grid during the fault by feeding in capacitive or inductive reactive current, depending on the fault. The feeding of reactive current lowers or raises the mains voltage and thus counteracts the error voltage. As a third requirement the system must return to normal operation within a defined period after the error has ended.

Due to their enormous rotating centrifugal masses, large power plants have a certain self-regulating effect in the event of a fault and have so far ensured that grid faults only rarely lead to blackouts. Until a few years ago, it was therefore still permissible for decentralized generation units such as wind energy or photovoltaic systems to disconnect directly from the grid in the event of a fault and stop feeding.

However, the ever-increasing share of renewable energies has forced a rethink. In 2019, renewable energy accounted for around 42% of total electricity generation in Germany. In addition, there are generators from the field of internal combustion engines such as combined heat and power plants or gas turbines. This fundamental change and the fact that a large part of the energy generation from renewable energy is implemented on the grid side with converters means that decentralized generation units and systems are also required to make their contribution to dynamic grid support, to ensure a stable electricity network. Similar Fault Ride Through (FTR) requirements are also applicable for large consumers that are connected to the grid.

Hence, in case of system perturbations of the electric power network, such as, for instance, a voltage dip, a brownout, an overvoltage condition, or the like, supporting capabilities for stabilizing the electric power network by photovoltaic farms, wind farms and/or the like may not be sufficient to ensure a stable operation of the electric power network alone. In this regard, it is considered to provide new requirements for electrolyzing plants which may make compulsory not only reactive power limit requirements but also injections of reactive current into the electric power network as well.

Moreover, large flexible loads connected to the electric power network, or grid, respectively, in particular electrolysis plants, may cause a substantial effect on the security and/or stability of the operation of the power supply network, especially, in case that the operation of the electrolyzing plant be not flexible with requirements regarding the operation of the power supply network. For example, during power supply network faults caused by different reasons, the alternating voltage may differ from a rated value, however, the electrolyzing plant shall stay connected and permanent disconnection shall be avoided.

For this reason, flexible load plants such as large-scale electrolysis plants need to stay connected during a voltage fault and continue their operation after the fault is cleared. For this purpose, the electrolysis plant plants need to be able to ride through faults and, may, for instance, contribute with specific services that can enhance the grid stability.

This shows that providing electric power network services such as FRT during fault could allow enabling more installation of large-scale electrolyzing plants resulting in more installed capacities and harmonization with the grid operation. So far, the installed capacities of electrolyzing plants are modest and not exceeding several MW in size, but with the present desire with regard to decarbonization policies in different sectors, large-scale electrolyzing plants are more and more expected to be added to the power supply network. This means that the entire functionality of the FRT needs to be addressed by the electrolyzing plants. In this regard, electric power network operators already have drafted some FRT requirements on the connection with the power supply network.

The FRT requirement may be addressed by an electric converter such as a conventional thyristor-based system providing a common blocking operation mode of the thyristors and the resuming the power supply operation again, once the fault is cleared. The same strategy may be applied by an electric converter based on an IGBT- or SiC-based technology allowing the power supply riding through the fault. Nevertheless, fulfilling these FRT requirements is a big challenge for the electrolysis plant and the converter system.

It is an object of the present invention to provide an electrolysis plant with Fault Ride Through Capability.

This object is solved by an Electrolysis plant comprising an electrolyser and a rectifier, the rectifier comprising a DC-voltage output that is connected to the electrolyser via a DC supply line and an AC-voltage input that is designed for a connection to a grid and for receiving power from said grid to supply the electrolyser with electrolysis current, wherein a bidirectional DC storage facility 15 that comprises a rechargeable electrical storage unit 17 is branching off the DC supply line 13.

The grid may be the public electricity grid or an island or isolated electricity network. Hence, according to the invention, the electrolysis plant may be connected to the public grid or an island network in a similar manner.

The invention is based already on the consideration that for high-performance electrolysis plants to be connected as consumer particularly to the public grid in future integrated energy systems, hardly any reliable approaches are known to implement a fault ride through capability in an electrolysis system, and, in particular to design and implement network support capability in case needed.

Connecting a large electrolysis plant to the public grid requires compliance with/the fulfilment of the local grid code requirements. Part of these requirements - especially for large plants - is a Fault Ride Through capability (FTR capability). The typical core requirement is to remain fully connected to the grid in case of a temporary voltage dip at the point of connection (Low Voltage Ride Through, LVRT). The grid operator specifies a curve where the voltage dip is time dependently shown, during which the plant must remain connected. Only longer or deeper voltage dips allow a disconnection of the plant. In addition, grid operators may demand to withstand a limited or unlimited number of such consecutive faults, or limit the number by the pre-defined threshold for the integrated power loss during all of these faults. Fulfilling these requirements is a huge challenge for the electrolysis plant operation and its converter system.

According to the electrolysis plant of the invention the electrolysis plant is equipped with a bidirectional DC storage facility that is branching off the DC supply line and that comprises a rechargeable electrical storage unit. With this bidirectional configuration it is possible charge the DC storage facility during normal operation and under stable grid conditions via the DC supply line and to discharge the storage facility in a Fault Ride Through operational mode. In the FRT mode, DC discharge current is extracted from the storage unit of the storage facility and feed in the DC supply line to compensate and stabilize operation of the electrolysis plant due to the temporary voltage dip in the grid. The electrolysis plant being equipped on the DC side of the rectifier with the bidirectional DC storage facility it is enabled to stay fully connected during a fault and will not trip in case of disturbances in the grid. The rechargeable storage unit may comprise a capacitor bank or battery cells for example that are dimensioned accordingly.

Beyond the FRT grid connection requirement the bidirectional DC storage facility can be advantageously utilized to provide a continuous DC current and hence a continuation of the sensitive electrochemical process even if the main power supply is off and with a decreasing voltage of the storage system due to its discharging. Usually, the electrochemical process of electrolysis plants does not feature Fault Ride Through capability, especially ramping-up after fault-clearance is challenging and may increase ageing of the system or impact safe operation.

Hence, with the present invention the major technical challenge of the continuation of the electrochemical process downstream the electrolysis in the event of a power outage as a result of a voltage dip can be solved. A continuous and safe operation of the electrolysis plant can be obtained. Should this event occur, the electrolysis process can still resume operation. Since the polarization curve (U-I-characteristic) of the electrolyser is rather flat, it would - in the known electrolysis plant configurations - otherwise react sensitive to even small voltage changes. The electrolysis threshold voltage of the cells and stacks is often in the range of 65 - 85% of the nominal voltage (Nernst voltage). After the fault is cleared, some grid operators demand full or almost full pre-fault power consumption within 1-10 seconds when the voltage has recovered to ~85-90% of nominal voltage, which is a big challenge.

Since the Nernst-voltage is in the same range, many state of the art electrolysis plants will not be able to reach pre-fault nominal power until the voltage has fully recovered or is balanced again. This might be achieved to some extend by an On-Load-Tap-Changer (OLTC) on any of the upstream transformers, but operating this mechanical switch typically takes 3-5 seconds, which is far too long reaction time to safely bridge a voltage dip and ramp-up fast enough in case the voltage recovery is not sufficient. During this time the electrolysis process might be able to only operate at low part load or not at all. Since some electrolysis plants only start the electrolysis process at 85% voltage, they would see an interruption of power inflow of several seconds, which can entirely stop the process. Especially repetitive faults pose a challenge to the systems, as a numerous turning on and off of the electrochemical process might lead to severe instabilities in the system and finally to a plant trip. In addition, such operation might also impact the ageing of the system negatively.

These hurdles can be avoided by the electrolysis plant of the present invention. With the present invention a particular important requirement for the grid operator can be addressed, that is a continuous consumption of the load is available after the fault is cleared. Should a large plant - or even worse, multiple large plants - trip in case of short time disturbances within the grid, the grid operator would struggle to balance the power in- and output after fault clearance. The power plants producing the power cannot be adjusted quick enough. Therefore, only a certain power is allowed to trip (to be disconnected) and it is essential for large consumers to remain connected in case of a short-time voltage dip.

The FRT concept of the electrolysis plant allows the availability of the electrolysis load after the fault is cleared while the chemical processes can be continued without major issues. Both are a very important requirements for the grid operator and the electrolysis plant operator as well.

By providing a sufficiently large bidirectional DC storage facility that is branching off the DC supply line a large electrolysis plant is enabled to grid code requirements and for Fault Ride Through Capability. Compared to other solutions and measures that are focused to rectifier system or converter the invention suggests a rather cost-efficient and reliable approach for an electrolysis plant of large scale. The electrolysis plant is conceived as being "FRT-ready" and scalable up to large electrolysis power consumption, as the bidirectional DC storage facility is scalable accordingly.

In an advantageous embodiment of the electrolysis plant the wherein the bidirectional storage facility comprises a DC-DC converter that is connected to the DC supply line and to the rechargeable electrical storage unit by virtue of a storage line.

The DC-DC converter allows flexibly an adaption from the operational DC voltage of the electrolysis system connected to the in the DC supply line and of the DC storage voltage needed to charge or discharge the rechargeable electrical storage unit. Furthermore, an advantageous decoupling and adjustment of the respective DC voltage levels is achieved so that depending on the electrical properties of the implemented storage unit - like e.g. the storage capacity and charging or discharging voltage - the storage unit can be operated. Hence the indirect connection of the storage unit to the DC supply line of the DC bus offers operational flexibility as the capacitors can be charged higher than the operating DC voltage of the DC supply line and can be discharged lower than the process voltage of the electrolysis, which must be kept.

Furthermore, simply connecting a storage capacity to the main AC input line or DC supply line of the rectifier power supply would only solve the issue to some degree, if the storage capacity is dimensioned sufficiently large. Also depending on the connection of the storage capacity, part of the infeed energy would be transferred to the grid or other consumers. This solution is quite expensive, though, compared to the solution of the invention with a bidirectional DC converter and DC storage technology connected directly to the electrolysis DC supply line or DC bus.

In a further advantageous embodiment of the electrolysis plant the DC-DC converter is configured as a bidirectional step-down converter holding a DC voltage at the DC supply line and a lower DC voltage at the storage line.

Both configurations, a boost or buck converter architecture can be implemented as needed in the bidirectional DC storage facility of the electrolysis plant. The converter architecture can be utilized to provide a continuous DC current and hence a continuation of the electrochemical process even if the main power supply is off and with a decreasing voltage of the bidirectional storage unit due to its discharging.

By using a bidirectional converter architecture, a recharging of the rechargeable electrical storage unit can be realized as soon as the grid voltage has stabilized again. Recharging can be performed during stable grid conditions and close to nominal grid voltage. In case no galvanic isolation is required in addition, a rather simple converter topology can be implemented in the bidirectional DC storage facility and utilized accordingly.

Therefore, in an advantageous embodiment of the electrolysis plant the DC-DC converter is configured as a bidirectional step-up converter holding a DC voltage at the DC supply line and a higher DC voltage at the storage line.

Furthermore, in another advantageous embodiment of the electrolysis plant the rechargeable electrical storage unit comprises a capacitor bank and/or a battery bank.

By connecting a sufficiently dimensioned storage unit, like a capacitor bank or battery bank, on the DC-side of the electrolysis plant via the DC-DC converter a bidirectional energy storage facility is provided that can be loaded by receiving electrical energy from public grid via the rectifier, and, unloaded as well in case needed to use the stored electrical energy. The capacitor or battery bank stores sufficient amount of energy at a suitable voltage level provided at the output of the DC-DC converter. It is very advantageous that particularly a capacitor bank can rather quickly discharge the stored energy back into the DC supply line to support and smoothly continue the electrolysis process to keep the current flowing to bridge the time until the grid voltage restores again after a temporary voltage dip. This prevents the tripping of the electrolysis process in the electrolyser on the DC-side behind the rectifier, since the power supply to it will basically not be interrupted during a short-term voltage drop.

Due to the nature of the connection, the electrolysis process is not impaired and pre-fault power consumption can be achieved even instantaneously once the input voltage from the grid to the rectifier of the electrolysis plant is sufficiently high again, by switching from the DC-DC converter back to the rectifier system.

The capacitor bank might also be used to prevent the electrolysis process connected to it from entering fuel cell mode for some time. Fuel cell mode will be initiated if the electrolysis voltage falls below a threshold value. Due to an adjusted design of the capacitor bank, for example by providing a secondary discharge path with a suitable resistance, it can be adjusted to discharge slowly and thus keep the electrolysis voltage above the threshold for some time. With this advantageous design of the capacitor bank a fuel cell mode of the electrolysis cells can be avoided and a safe electrolysis status of operation ensured while keeping the voltage at least above the required minimum threshold value, e.g. in a standby or shutdown mode of the electrolysis plant.

There are many electrical storage configurations possible, also combinations of different storage technologies that are enabled to provide a DC output voltage when being discharged and that require a predetermined DC input voltage when being recharged again.

In a particular advantageous embodiment of the electrolysis plant the rechargeable electrical storage unit features a storage capacity that is provided in the range of the rated active power of the electrolyser multiplied by a time interval of 1,5 - 2,5 seconds, preferably 2,0 seconds.

In a further advantageous embodiment of the electrolysis plant the rechargeable electrical storage unit features a storage capacity of at least 5 kWh per 10 MW rated active power of the electrolyser.

It has been found that this design specification in regard to a minimum storage capacity required per rated active power of the electrolysis plant in case of a single temporary grid fault provides a good approach and feasibility.

In a further advantageous embodiment of the electrolysis plant the rechargeable electric storage unit features a multiple of the above-mentioned minimum capacity depending on the number of consecutive fault events that need to be required, which is usually not more than 10 events within 15 minutes.

Hence, in an advantageous embodiment of the electrolysis plant the rechargeable electrical storage unit features a storage capacity of a multiple of the at least 5 kWh per 10 MW rated active power capacities to enable riding through a higher number of consecutive faults, preferably 5-10 times of said capacity.

The storage unit needs to be dimensioned in a way, that at minimum the required energy loss threshold of the grid code requirement can be provided. Some current drafts for FRT requirements foresee or discuss a threshold of the rated active power of the plant multiplied by 2 s. For a 20 MW plant, for example, this would result in a required storage system with roughly 11 kWh. Providing electrical storage units of this capacities seem not being a large challenge as this is an available range for batteries or capacitors. Hence, the electrical storage unit can be dimensioned accordingly.

Combining a buck or step-up converter with high voltage capacitors or super capacitors opens the possibility of realizing a smaller dimensioned storage unit, as the stored energy in capacitors is proportional to the square of the voltage.

Especially for electrolysis applications with low currents, up to about 5 kA with IGBTs, this measure can be taken with comparably low additional effort.

The DC-DC converters may advantageously use IGBTs, IGCTs or SiC MOSFETs, depending on the ratings and availability of semi-conductors.

In a further advantageous embodiment of the electrolysis plant the bidirectional DC storage facility features a galvanic isolation.

A galvanic isolation is a rather favourable option and might also be a requirement for some applications of the electrolysis plant, where the bidirectional DC storage facility and its components are galvanically isolated from the DC supply line of the electrolysis plant. Galvanic isolation is a means of preventing DC and unwanted AC currents between two parts of a system while still allowing signal and power transfer between those two parts. It also reduces fault-currents and thus increases the overall safety of a system. This is typically achieved by converting the electric flow into a magnetic flux and back, like in a transformer.

In a further advantageous embodiment of the electrolysis plant comprises a control unit with an interface to a grid stabilization equipment that is designed to operate the rechargeable electrical storage facility.

This control unit is of a particular relevance to operate the storage unit in a controlled manner in view of the up-to-date conditions and surveillance of the grid voltage and to charge or discharge the storage unit, for example the capacitor- or battery bank. With the control unit an in-situ control of the bidirectional DC storage facility is implemented. The control interface to grid stabilizing equipment which measures at point of connection, enables the full exploitation and adequate use of the electrical energy stored that is required in a fault ride through operational mode. The electrolysis plant operation and the electrochemical processes can be continued seamlessly. It is also possible, for example in non-operational mode, to use the stored energy also otherwise, or to provide support in other grid support related functions.

In a further advantageous embodiment of the electrolysis the rectifier is designed for enabling a bidirectional operational mode, in particular the rectifier comprises a multilevel-modular-converter (MMC) that is provided, and that the rectifier being connected to the public grid, so that voltage support can be achieved by providing reactive power for the public electricity grid.

The voltage source converter (VSC), particularly designed as a modular multilevel converter (MMC), is preferably designed for bidirectional operation and is connected to a central network connection point, so that voltage support through reactive power provision for the public power grid can be realized.

Advantageously, further network services for the public grid are also possible, such as the assumption of network functions.

The voltage source converter (VSC) is also preferably designed as an IGBT-based converter architecture which is capable to fed electrical power from the supply line into the grid as required. Possible architectures include modular multilevel converter, active front ends, and so on. This is a special and advantageous form of bidirectional operation of the electrolyser plant. This is possible if excess power is stored in the capacitor bank connected via the DC-DC converter of the storage facility on the DC-side of the converter that is available. This may be the case like during partial load operation or maintenance of individual modules or parts of the electrolyser in normal operation. An MMC or other topology therefore optionally transfers power from the DC side to the AC side or vice versa, which promotes particularly flexible operation of the electrolysis plant.

Preferably converters are connected that allow a 4-quadrant mode operation. The energy stored inside the capacitors of the converter is usable for grid stabilization services, like for ancillary services, e.g. for fast frequency response requirements. This is advantageous in operational situations where part of the electrolysers in the electrolysis plant are not in operation, like in part load operation or due to partial service shutdown, and the capacitor bank is not required to discharge electricity and supply the DC-current to an operating electrolyser or electrolyser modules. In case the converter system is used this way, the electrolysis process is preferably disconnected from the capacitor bank. This can be achieved by a mechanical switch or a semi-conductor-based device.

Another aspect of the invention relates to a method to operate an electrolysis plant that is connected to a grid, like preferably the public grid or an island or isolated network.

In said method for operating an electrolysis plant the electrolysis plant is being connected to a grid, wherein AC-voltage from said grid is supplied to the rectifier via the AC-voltage input, and wherein during a temporary voltage dip of the grid voltage at the point of connection the electrolysis plant stays connected, while the rechargeable electrical storage unit being discharged and DC current being feed in the DC supply line.

With this method for operating the electrolysis plant the power consumption of the electrolysis plant is maintained while being connected to the grid, for instance the public grid, in case of a temporary voltage dip at the point of connection or even a fault within the electrolysis plant. A continuous operation of the electrolysis is ensured while the Fault Ride Through conditions of the grid operator in case of a temporary voltage dip can be fulfilled. The requirement to demonstrate a Fault Ride Through capability for a large electrolysis plant while staying connected to the grid and continuously operated is ensured.

In an advantageous execution of the method after the grid voltage has stabilized again the rechargeable electrical storage unit is being recharged by extracting charging current from the DC supply line.

After the grid fault is cleared and the grid has stabilized again, a recharging mode can be initiated that is controlled by the control unit.

The control can be setup in a way to provide even instantaneous power consumption from the grid by switching from the DC-DC converter to the rectifier within milliseconds or it can provide a defined ramp for both systems to enable a smooth transition, as required.

Hence, in an advantageous execution of the method, power flow is transferred from the DC-DC converter to the rectifier after the grid voltage has stabilized again.

Once the recharging is completed and the rechargeable electrical storage unit is fully or sufficiently recharged to a defined standby level, stored energy is available for being partly supplied as needed to the DC supply line to support operation of electrolysis plant or to provide grid support functionalities when stored energy being re-feed to the rectifier.

Therefore, in a further beneficial implementation of the method, after the grid voltage has stabilized again power flow is transferred from the DC-DC converter to the rectifier within some 10 ms to some 100 ms such that a highly dynamic power consumption increase to the grid is provided.

This complies with a requirement of a short-term mode of operation of power flow transfer that can be advantageously performed.

In a further beneficial implementation of the method, after the grid voltage has stabilized again power flow is transferred from the DC-DC converter to the rectifier (5) within 10 ms to 10 seconds such that a smooth transition of power flow is provided.

This complies with a requirement of a stretched mode of operation of power flow transfer that can alternatively be performed.

The properties, features and advantages of the invention described above, as well as the manner in which they are achieved, will be explained in more detail in connection with the figures in the following description of the example and variations thereof. The example and the corresponding variations serve to explain the invention and do not limit the invention to the combinations of features indicated therein, even with respect to functional features. Moreover, any of the features disclosed in the example below may be considered in isolation and suitably combined with the features of any of the above embodiments and their further aspects.

It is shown in:
- FIG 1: a schematic representation of grid code conditions applicable for a connected or connectable electrolysis plant;
- FIG 2: a schematic diagram showing operating areas of the electrolysis plant with regard to a power supply from the electric power network or public grid;
- FIG 3: a schematic illustration of an example of an electrolysis plant provided with Fault Ride Through capability;
- FIG 4: a schematic illustration of another example of an electrolysis plant provided with Fault Ride Through capability.

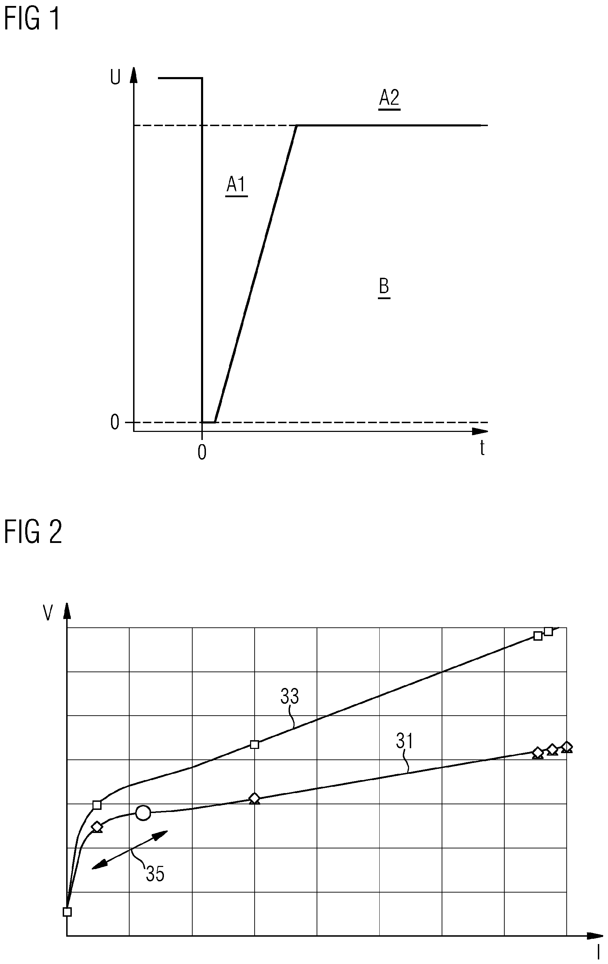

FIG 1 illustrates a schematic representation of typical grid code conditions that are applicable for a connected or connectable electrolysis plant.

The lines represent mandatory boundary conditions that must be complied with by the electrolysis plant, whereby a corresponding, specified switching state must be observed within or above the lines.

Connecting a large electrolysis plant to the public grid requires compliance with/the fulfillment of the local grid code requirements. Also islanded grid may feature similar requirements. Part of these requirements - especially for large plants - is a Fault Ride Through capability. The typical core requirement is to remain fully connected to the grid in case of a temporary voltage dip at the point of connection and to consume the full pre-fault power after a short period after the fault is cleared.)

The grid operator specifies a curve where the voltage dip is time dependently shown, during which the plant must remain connected (Area A1 + A2). Longer or deeper voltage dips allow a disconnection of the plant (Area B). A typical example is shown in FIG 1. Fulfilling this requirement is a huge challenge for the electrolysis plant and its converter system.

In the present example of an undervoltage event, a voltage U compared to the time t is shown in seconds. It has been shown that in the event of a temporary voltage dip, as shown in area A1, a switched-on state of the electrolysis plant should always be maintained. This means the electrolysis plant is required to stay fully connected. However, if this is a sharp voltage dip, for example in the direction of closely down to 0 V, as shown by the lowest dotted line, this switched-on and ready for operation state only needs to be maintained for a rather short time interval. In this example, the time limit of such an error state is about 0.2 seconds. In the case of a lower voltage dip, the time in which the switched state should be maintained increases linearly. Above a specified threshold value, as shown by the top dashed line for the A2 range, the switched state should generally be maintained regardless of the duration of the existing fault state, or the voltage deviation from the setpoint.

However, in case the duration of the fault condition exceeds area A1, as shown in area B, it is generally permitted for the electrolysis plant to be disconnected from the grid, at least for a short time, or in case that the operational mode of the electrolysis plant needs to be changed or stopped for some reasons. If the electrolysis plant meets these limiting conditions, it has grid compatibility and is accordingly "fault ride through" capable or "FRT-Ready".

In addition, grid operators may demand to withstand an unlimited number of consecutive faults, as long as the integrated power loss during all of these faults does not surpass a pre-defined threshold. Alternatively, the number of faults per time may be limited to a reasonable value, e.g. max. 10 faults within 15 min.

In FIG 2 a schematic diagram is provided which shows operating areas of an electrolysis plant with regard to a power supply from the electric power network or public grid. The electrolysis voltage U is depicted versus the electrolysis current I. A graph 31 shows a typical dependency at a begin of life (BoL) of an electrolysis plant, wherein a graph 33 shows the dependency at the end of life (EoL) of the electrolysis plant. The EoL graph 33 is located above the BoL graph 31 and shows a higher increase. Hence a substantially higher voltage is required for EoL operation of the electrolysis plant to result in the same electrolysis current compared to the BoL operation. A double arrow 35 indicates a range of a so called polarization operation, especially with regard to a grid event like a temporary steep voltage dip in the bending down area illustrated by the double arrow 35. The current I is highly sensitive against voltage changes particularly in and above said bending down area of the polarization curve. A voltage above a threshold is desired to ensure a stable mode of normal electrolysis operation in full load or part load. Furthermore, some minimum voltage needs to be provided to avoid fuel cell mode of the electrolysis cells and to secure the electrolysis cells against damage therefrom (Nernst voltage).

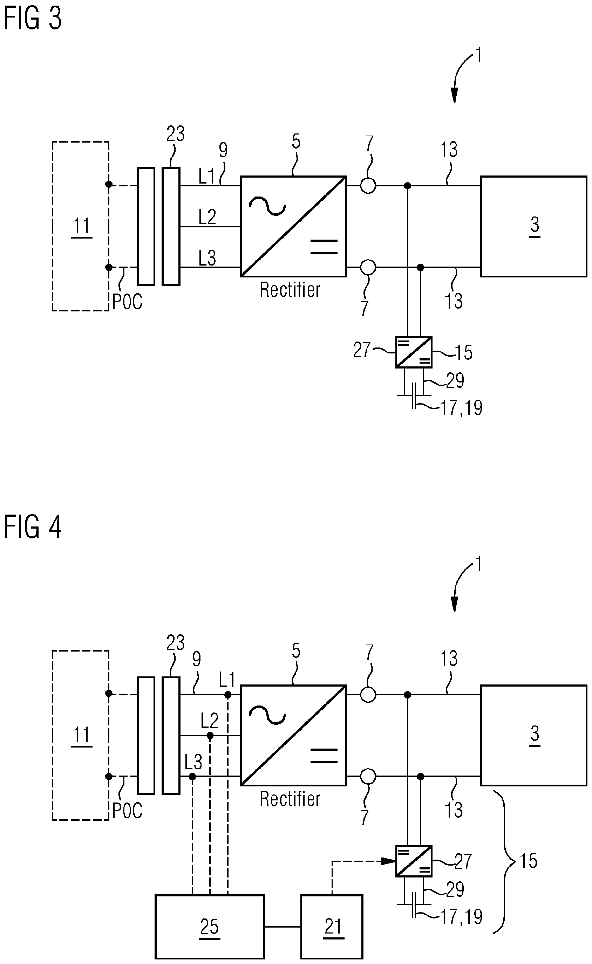

FIG 3 shows a schematic illustration of an example of an electrolysis plant 1 that is equipped with Fault Ride Through capabilities. The electrolysis plant 1 comprises an electrolyser 3 and a rectifier 5. The rectifier 5 has a three phase AC-input 9 with phases L1, L2, L3 for receiving alternating current and a DC-voltage output 7 for DC current supply. The electrolysis plant 1 is connected to the power grid 11 via a transformer 23, so that when the electrolysis system 1 is in operation, the electrolyser 3 is supplied with direct current via the rectifier 5 to run the electrolysis process. At the DC-side of the rectifier 5 a DC supply line 13 is connected to the DC-voltage output 7. Further a bidirectional DC storage facility 15 is installed, that is branching off the DC supply line 13. The bidirectional DC storage facility 15 comprises a bidirectional DC-DC converter 15 and a rechargeable electrical storage unit 17. In this example the rechargeable electrical storage unit 17 is realized as a capacitor bank 19 of a predetermined capacity. It is also possible that the rechargeable electrical storage unit 17 comprises a battery bank or any other energy storage system.

It is important to notice that the bidirectional DC storage facility 15 with its electrical storage unit 17 is advantageously installed on the DC-side of the rectifier 5 and that the storage facility 15 is enabled for flexible control of the charging and discharging of the rechargeable electrical storage unit 17. The DC-DC converter 27 is connected to the DC supply line 13 and to the rechargeable electrical storage unit 17 by virtue of a storage line 29. The DC-DC converter 27 can be configured as a bidirectional step-down converter holding a predefined DC voltage at the DC supply line 13 and a lower DC voltage at the storage line 27. The DC voltage provided at the DC supply line 13 corresponds to the operational voltage of the electrolyser 3. It is also possible that the DC-DC converter 27 is configured as a bidirectional step-up converter holding a DC voltage at the DC supply line 13 and a higher DC voltage at the storage line 27.

Typically, the rechargeable electrical storage unit 17 features a storage capacity that is provided in the range of the rated active power of the electrolyser 3 multiplied by a time interval of 1,5 - 2,5 seconds, preferably 2,0 seconds. This storage capacity is in the required order to bridge a possible grid fault and voltage dip in a fault ride through requirement and might also be a multiple of the above-mentioned capacities to enable riding through more consecutive faults. It is for example particularly recommended that in the electrolysis plant 1 the rechargeable electrical storage unit 17 features a storage capacity of at least 5 kWh per 10 MW rated active electrolysis power of the electrolyser 3. Hence, for implementing a "FTR-Ready" functionality to a large electrolysis plant 1 of 100 MW rated power, a storage capacity of about 50 kWh is required. Technically this is a DC storage capacity for battery banks or capacitor banks 17 that is easily available for implementation. It may be required or favourable for some installations that the bidirectional DC storage facility 15 features a galvanic isolation in addition. Galvanic isolation means the avoidance of electrical conduction between two circuits between which power or signals are to be exchanged. This is typically achieved by applying an isolating transformer unit within the DC-DC converter.

In normal operation the electrolysis plant 1 is connected to the grid 11, and an AC-voltage from the grid 11 is supplied to the rectifier 5 via the AC-voltage input 9. During a temporary voltage dip of the grid voltage at the point of connection POC the electrolysis plant 1 stays fully connected, while the rechargeable electrical storage unit 17 is discharged and DC current is feed in the DC supply line 13. Therefore, the plurality of electrolysers 3 in a large electrolysis plant 1 can continue operation without major disturbances as the voltage dip in the grid 11 impacting the AC-voltage input 9 is bridged or rather compensated on the DC side via a respective DC current that is discharged from the storage unit 17 via the storage line 29 and supplied to the supply line 13. The DC-voltage provided in the DC supply line 13 can be kept rather on the same pre-fault nominal operational voltage level to continuously run the sensitive electrochemical processes in the electrolyser 3. After the grid voltage has stabilized again the rechargeable electrical storage unit 17 is recharged again by extracting charging current from the DC supply line 13 during normal operation and under stable grid conditions in view to nominal grid frequency and respective nominal grid voltage stability at the point of connection POC. The typical FRT core requirement is fulfilled as the electrolysis plant 1 remains fully connected to the public grid 11 in case of a temporary voltage dip at the point of connection POC and to consume the full pre-fault power after a short time period after the fault is cleared. The later features can be achieved since the electrolysis process does not need to restart since it remains operational.

In addition, the rectifier 5 is designed for enabling a bidirectional operational mode, in particular a multilevel-modular-converter (MMC) or another suitable topology may be used that is connected to the public grid 11. With a MMC or other 4-quadrant topology also voltage support can be achieved by providing reactive power for the public electricity grid 11, in grid situations that require such measures.

A large-scale electrolysis plant 1 will typically comprise a plurality of electrolysers 3 or so-called electrolyser blocks or stacks. An electrolyser 3 or electrolyser block will have about 5 MW to 20 MW and above of power consumption. The overall large-scale electrolysis plant 1 will be in the range stated above of more than 50 MW, typically 100 MW and above. Particularly for large-scale electrolysis plants 1 the Fault Ride Through capability is expected to be of high relevance in the future. On the DC-side a DC-circuit breaker (not shown in FIG 3) can be provided in addition that is connected to the electrolyser 3. In this case the DC-circuit breaker is controllable and designed to completely disconnect the electrolyser 3 as needed from DC-power supply.

In FIG 4 a schematic illustration of another example of an electrolysis plant 1 provided with Fault Ride- Through capability is shown. This example is - compared to FIG 3 electrolysis plant 1 - equipped with an enhanced FRT surveillance and control system. The electrolysis plant 1 shown in FIG 4 is enabled for Fault Ride Through capability during operation when being connected to the grid 11, the public grid 11 for instance. Here the electrolysis plant 1 comprises a control unit 21 with an interface to a grid stabilization equipment 25 that is designed to discharge the capacitor bank 19 as needed in a controlled manner. To do this appropriately a control signal is being used to control the operational mode and setpoint of the bidirectional DC-DC converter 27. There is a charging mode and a discharging mode implemented in the control unit 21 that can be activated selectively to operate the DC-DC converter 27 in a respective mode. During operation of the electrolysis plant 1 the grid voltage at the point of connection POC is continuously monitored indirectly at the secondary windings of the connection transformer 23, preferably for each of the three phases L1, L2, L3 of the connection transformer 23. Alternatively, it can also be connected to measure the primary side voltage of the transformer 23.

By connecting a sufficiently dimensioned capacitor bank 19 on the DC-side of the electrolysis plant 1 an energy storage device is realized that can be loaded in a controlled manner by receiving electrical energy from grid 11 via the rectifier 5 and the bidirectional DC-DC converter 27 that is branching off the DC supply line 13. An advantageous discharging of the capacitor bank 19 is also implemented in case required to use the stored electrical energy in the capacitor bank 19 for FRT operational mode. The capacitor bank 19 stores sufficient amount of energy at a suitable DC-storage voltage. It is very advantageous that the capacitor bank 19 can immediately be activated to change into a discharging mode within a few Milliseconds and then supplies stored electrical energy into the electrolysis process to keep the current flowing to bridge and compensate the time of a few hundred milliseconds or seconds until the grid voltage restores again after a temporary voltage dip monitored in the grid 11.

This configuration prevents the tripping of the electrolysis process in the electrolyser 3 on the DC-side behind the rectifier 5, since the power supply to it will basically not be interrupted during a short-term voltage drop. To improve the operational behavior of the electrolysis plant 1 further the rectifier 5 is designed as a converter that allows 4-quadrant mode of operation, so that a bidirectional operation is possible for the rectifier 5 that included deployment of additional grid stabilization services if needed, like reactive power provision or instantaneous reserve.

Particularly, when being connected to the public grid 11 the electrolyser plant 1 is capable for Fault-Ride Through operation and compliance with local grid code requirements. In general, the grid 11 may be implemented as a public grid 11 or an island or isolated grid 11 respectively. In normal operational mode of the electrolysis plant 1 the electrolysis plant 1 is connected to the grid 11 via the transformer 23, that provides three phases medium voltage output at nominal grid frequency of 50 or 60 Hz for example. The AC-Voltage initially received from the respective grid 11 and provided on the secondary side of the connection transformer 23 after transformation is supplied to the rectifier 5 via the AC-voltage input 9. During a temporary voltage dip at the point of connection POC the electrolysis plant 1 stays connected to the grid 11, while the bidirectional electrical energy storage facility 15 is being switched into a discharging mode of operation on the DC-side of the rectifier 5 by opening respective current path to feed in the DC supply line 13 at the rated operational voltage level of the electrolyser 3. Electrical energy is discharged from the capacitor bank 19 and/or battery bank via storage line 29 and converted to the operational voltage level by virtue of the DC-DC converter.

In this example the rectifier 5 is also advantageously designed for enabling also a bidirectional operational mode in case needed. Particularly a multilevel-modular-converter (MMC) or other suitable topology is being used as rectifier 5 that comprises a plurality of capacitors as elements of the IGBT-Topology (IGBT: Isolated Gate Bipolar Transistor), that can be used as inherent electrical storage capacity that can be discharged as required in addition to the stored capacity in the rechargeable electrical storage unit 17. The inherent electrical energy of the capacitors in the VSC-Topology is converted in the MMC based rectifier 5 to AC, which is being supplied to the AC-voltage output 9 to stabilize the public grid 11. With the rectifier 5 designed as MMC or topology with similar features and connected to the grid 11, a voltage support can be achieved by providing reactive power for the grid 11 on demand, particularly in case of a public electricity grid 11.

The technology which is applied for the electrochemical process in the electrolyser 3 may be based on a plurality of alkaline electrolysis cells and/or electrolysis cells having a proton exchange membrane, hereinafter referred to as PEM-cell, and /or an anion exchange membrane hereinafter referred to as AEM-cell, or solid oxide electrolysis cell. In the electrolysis plant 1 for the electrolyser 3 combinations of different types of electrolysers 3 and underlying electrolysis processes and cells are possible, e.g. hybrid electrolysis systems are included as well.

## Claims

1. Electrolysis plant (1) comprising an electrolyser (3) and a rectifier (5), the rectifier (5) comprising a DC-voltage output (7) that is connected to the electrolyser (3) via a DC supply line (13) and an AC-voltage input (9) that is designed for a connection to a grid (11) and for receiving power from said grid (11) to supply the electrolyser (3) with electrolysis current, wherein a bidirectional DC storage facility (15) that comprises a rechargeable electrical storage unit (17) is branching off the DC supply line (13)

2. Electrolysis plant (1) according to claim 1, wherein the bidirectional storage facility (15) comprises a DC-DC converter (27) that is connected to the DC supply line (13) and to the rechargeable electrical storage unit (17) by virtue of a storage line (29).

3. Electrolysis plant (1) according to claim 2, wherein the DC-DC converter (27) is configured as a bidirectional step-down converter holding a DC voltage at the DC supply line (13) and a lower DC voltage at the storage line (27).

4. Electrolysis plant (1) according to claim 2, wherein the DC-DC converter (27) is configured as a bidirectional step-up converter holding a DC voltage at the DC supply line and a higher DC voltage at the storage line (27).

5. Electrolysis plant (1) according to one of the preceding claims, wherein the rechargeable electrical storage unit (17) comprises a capacitor bank (19) and/or a battery bank.

6. Electrolysis plant (1) according to one of the preceding claims, wherein the rechargeable electrical storage unit (17) features a storage capacity that is provided in the range of the rated active power of the electrolyser (3) multiplied by a time interval of 1,5 - 2,5 seconds, preferably 2,0 seconds.

7. Electrolysis plant (1) according to one of the preceding claims, wherein the rechargeable electrical storage unit (17) features a storage capacity of at least 5 kWh per 10 MW rated active power of the electrolyser (3).

8. Electrolysis plant (1) according to claim 7, wherein the rechargeable electrical storage unit (17) features a storage capacity of a multiple of the at least 5 kWh per 10 MW rated active power capacities to enable riding through a higher number of consecutive faults, preferably 5-10 times of said capacity.

9. Electrolysis plant (1) according to one of the preceding claims, wherein the bidirectional DC storage facility (15) features a galvanic isolation.

10. Electrolysis plant (1) according to one of the preceding claims, comprising a control unit (21) with an interface to a grid stabilization equipment (25) that is designed to operate the rechargeable electrical storage facility (17).

11. Electrolysis plant (1) according to one of the preceding claims, wherein the rectifier (5) is designed for enabling a bidirectional operational mode, in particular a multilevel-modular-converter (MMC) is provided, and the rectifier (5) being connected to the public grid (11), so that voltage support can be achieved by providing reactive power for the public electricity grid (11).

12. Method for operating an electrolysis plant (1) according to one of the preceding claims, wherein the electrolysis plant (1) is connected to a grid (11), wherein AC-voltage from said grid (11) is supplied to the rectifier (5) via the AC-voltage input (9), and wherein during a temporary voltage dip of the grid voltage at the point of connection the electrolysis plant (1) stays connected, while the rechargeable electrical storage unit (17) being discharged and DC current being feed in the DC supply line (13).

13. Method according to claim 12, wherein after the grid voltage has stabilized again the rechargeable electrical storage unit (17) is being recharged by extracting charging current from the DC supply line (13).

14. Method according to claim 13, wherein after the grid voltage has stabilized again power flow is transferred from the DC-DC converter (15) to the rectifier (5).
